# FASCICULE DE BREVET EUROPEEN

(11) **EP 2 893 531 B1**
(45) Date de publication et mention de la délivrance du brevet: **30.05.2018**
(21) Numéro de dépôt: 13759465.1
(22) Date de dépôt: 30.08.2013
(51) Int. Cl.: G10L 21/0208, H04R 1/08

(54) **DISPOSITIF ET PROCÉDÉ POUR FOURNIR UN SIGNAL AUDIO DE RÉFÉRENCE À UNE UNITÉ DE TRAITEMENT ACOUSTIQUE**
VORRICHTUNG UND VERFAHREN ZUR ÜBERTRAGUNG EINES REFERENZTONSIGNALS AN EINE AKUSTISCHE VERARBEITUNGSEINHEIT
DEVICE AND METHOD FOR SUPPLYING A REFERENCE AUDIO SIGNAL TO AN ACOUSTIC PROCESSING UNIT

(30) Priorité: 06.09.2012 FR 1258360
(43) Date de publication de la demande: 15.07.2015
(73) Titulaire: SAGEMCOM BROADBAND SAS, 92500 Rueil Malmaison (FR)
(72) Inventeur: EVRARD, Etienne, F-92500 Rueil Malmaison (FR)
(74) Mandataire: Cabinet Le Guen Maillet
(86) Numéro de dépôt international: PCT/EP2013/067960
(87) Numéro de publication internationale: WO 2014/037283

(56) Documents cités:
- EP-A1- 0 597 201
- EP-A1- 0 696 126
- US-A- 5 400 399
- US-A- 5 999 901
- C. Breining ET AL: "Acoustic echo control. An application of very-high-order adaptive filters", IEEE Signal Processing Magazine, vol. 16, no. 4, 1 July 1999 (1999-07-01), pages 42-69, XP055012609, ISSN: 1053-5888, DOI: 10.1109/79.774933

## Description

La présente invention concerne un équipement comportant une première interface destinée à être connectée à un dispositif de restitution sonore et au moins une seconde interface destinée à être connectée à au moins un microphone, ledit équipement comportant une unité de traitement acoustique adaptée pour délivrer un signal audio filtré par atténuation ou suppression d'un signal audio de référence à partir d'un signal audio reçu via ladite seconde interface.

Aujourd'hui on trouve de nombreuses applications permettant la reconnaissance vocale et ainsi de commander des appareils par la voix. La difficulté réside dans le fait de pouvoir distinguer ces commandes vocales d'un environnement sonore bruité.

On retrouve le même type de problématique dans le monde de la téléconférence. Il peut être parfois difficile de clairement distinguer les paroles d'un interlocuteur à cause d'un environnement sonore bruité.

Cet environnement sonore bruité est souvent lié à un contenu audio ou audiovisuel qui est restitué pendant la téléconférence ou pendant que l'utilisateur transmet sa commande vocale. On prendra par exemple le cas d'un système home-cinéma (« home-theater » en anglais) que l'on voudrait commander par la voix. Lorsque le système home-cinéma est en marche, un signal sonore est restitué dans la pièce, potentiellement avec un volume sonore élevé. Il serait alors difficile pour le système de distinguer des commandes vocales dans cette situation.

Il existe des composants permettant de supprimer un signal audio de référence à partir d'un signal audio capté grâce à un ou plusieurs microphones, comme divulgué dans la demande de brevet EP0597201. Des cartes électroniques d'évaluation sont disponibles sur étagère sur la base de tels composants. Cependant, ces composants et cartes électroniques d'évaluation ne permettent pas d'obtenir un résultat satisfaisant dans de nombreuses configurations d'installation. En effet, si l'on reprend l'exemple du système home-cinéma susmentionné, les temps de propagation dans l'air de signaux sonores issus de haut-parleurs dépendent de l'emplacement effectif de ces haut-parleurs et la configuration de ces composants et cartes électroniques est souvent inadaptée, ce qui fait que le composant ne retrouve pas le signal de référence dans le signal audio capté par le microphone.

Il est donc souhaitable de pallier ces inconvénients de l'état de la technique.

L'invention concerne un système selon la revendication 1 comportant une première interface destinée à être connectée à un dispositif de restitution sonore et au moins une seconde interface destinée à être connectée à au moins un microphone, ledit équipement comportant une unité de traitement acoustique adaptée pour délivrer un signal audio filtré par atténuation ou suppression d'un signal audio de référence à partir d'un signal audio reçu via ladite seconde interface. L'équipement est tel qu'il comporte des moyens pour mettre en oeuvre une phase d'initialisation, comportant : des moyens pour déterminer une latence de propagation entre un instant de transmission d'un premier signal audio via ladite première interface et un instant de réception d'un second signal audio via ladite seconde interface ; des moyens pour configurer une mémoire tampon avec un seuil de déclenchement de lecture défini en fonction de ladite latence de propagation déterminée. L'équipement est tel qu'il comporte en outre des moyens pour mettre en oeuvre une phase de fonctionnement nominal, comportant : des moyens pour transmettre un troisième signal audio via ladite première interface, ledit troisième signal audio étant ledit signal de référence après passage dans ladite mémoire tampon.

Ainsi, il est possible de parfaitement adapter la configuration de l'équipement à diverses situations dans lesquelles la voix d'un utilisateur doit être distinguée dans un environnement sonore bruité voire très bruité à cause d'un signal audio que l'équipement envoie au dispositif de restitution.

Selon un mode de réalisation particulier, ledit premier signal audio est constitué d'un motif prédéfini.

Selon un mode de réalisation particulier, lesdits moyens pour déterminer la latence de propagation comportent des moyens pour détecter un franchissement de seuil d'amplitude dudit second signal audio.

Selon un mode de réalisation particulier, lesdits moyens pour déterminer la latence de propagation comportent un filtre de North appliqué entre ledit premier signal audio et ledit second signal audio. Lesdits moyens pour mettre en oeuvre la phase d'initialisation sont implémentés dans une unité de contrôle connectée à une sortie de l'unité de traitement acoustique pour recevoir ledit signal audio filtré. Selon un mode de réalisation particulier, l'unité de contrôle désactive toute transmission de signal audio de référence à ladite unité de traitement acoustique pendant ladite phase d'initialisation. Lesdits moyens pour mettre en oeuvre la phase d'initialisation, ladite première interface et lesdits moyens pour transmettre le troisième signal audio sont implémentés dans un premier dispositif, l'unité de traitement acoustique et ladite seconde interface sont implémentées dans un second dispositif destiné à être relié audit premier dispositif.

L'invention concerne également un procédé mis en oeuvre selon la revendication 6 par un équipement comportant une première interface destinée à être connectée à un dispositif de restitution sonore et au moins une seconde interface destinée à être connectée à au moins un microphone, ledit équipement comportant une unité de traitement acoustique adaptée pour délivrer un signal audio filtré par atténuation ou suppression d'un signal audio de référence à partir d'un signal audio reçu via ladite seconde interface. Le procédé est tel qu'il comporte une phase d'initialisation comportant les étapes suivantes : déterminer une latence de propagation entre un instant de transmission d'un premier signal audio via ladite première interface et un instant de réception d'un second signal audio via ladite seconde interface ; configurer une mémoire tampon avec un seuil de déclenchement de lecture défini en fonction de ladite latence de propagation déterminée. Le procédé est tel qu'il comporte en outre une phase de fonctionnement nominal comportant l'étape suivante : transmettre un troisième signal audio via ladite première interface, ledit troisième signal audio étant ledit signal de référence après passage dans ladite mémoire tampon.

L'invention concerne également un programme d'ordinateur, selon la revendication 7 qui peut être stocké sur un support et/ou téléchargé d'un réseau de communication, afin d'être lu par un processeur. Ce programme d'ordinateur comprend des instructions pour implémenter l'un quelconque des procédés mentionnés ci-dessus, lorsque ledit programme est exécuté par le processeur. L'invention concerne également des moyens de stockage selon la revendication 8 comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système dans lequel l'invention peut être mise en oeuvre ;
- la Fig. 2A illustre schématiquement un exemple d'architecture matérielle d'un dispositif source du système de la Fig. 1 ;
- la Fig. 2B illustre schématiquement un exemple d'architecture matérielle d'un dispositif de traitement acoustique du système de la Fig. 1 ;
- la Fig. 3 illustre schématiquement un autre exemple d'architecture matérielle du dispositif source ;
- la Fig. 4 illustre schématiquement un algorithme d'initialisation du dispositif source ;
- la Fig. 5 illustre schématiquement un algorithme de fonctionnement nominal du dispositif source ;
- la Fig. 6 illustre schématiquement une vue en perspective simplifiée d'une coque d'un boîtier dans lequel le dispositif de traitement acoustique peut être installé ;
- la Fig. 7A illustre schématiquement une vue en perspective d'un support à microphone destiné à être placé dans le boîtier ;
- la Fig. 7B illustre schématiquement une autre vue du support à microphone.

Dans un système dans lequel un dispositif de restitution est destiné à restituer, sous la forme d'un signal sonore, un signal audio fourni par un équipement source, il est proposé de mettre en oeuvre une phase d'initialisation dans laquelle une latence de propagation est déterminée entre l'émission du signal audio par l'équipement source et la réception d'un signal sonore correspondant par au moins un microphone destiné à capter au moins la voix d'un utilisateur dans une phase de fonctionnement nominale. Une mémoire tampon est ensuite configurée avec un seuil de déclenchement de lecture défini en fonction de la latence de propagation déterminée. Ensuite, dans la phase de fonctionnement nominale, lorsque l'équipement transmet un signal audio au dispositif de restitution, l'équipement le transmet aussi à la mémoire tampon qui provoque ainsi un retard. Une unité de traitement acoustique adaptée pour délivrer un signal audio filtré par atténuation ou suppression d'un signal audio de référence à partir d'un signal audio reçu est utilisée, avec en entrée ce que capte(nt) le(s) microphone(s) et en signal de référence, le signal retardé par la mémoire tampon.

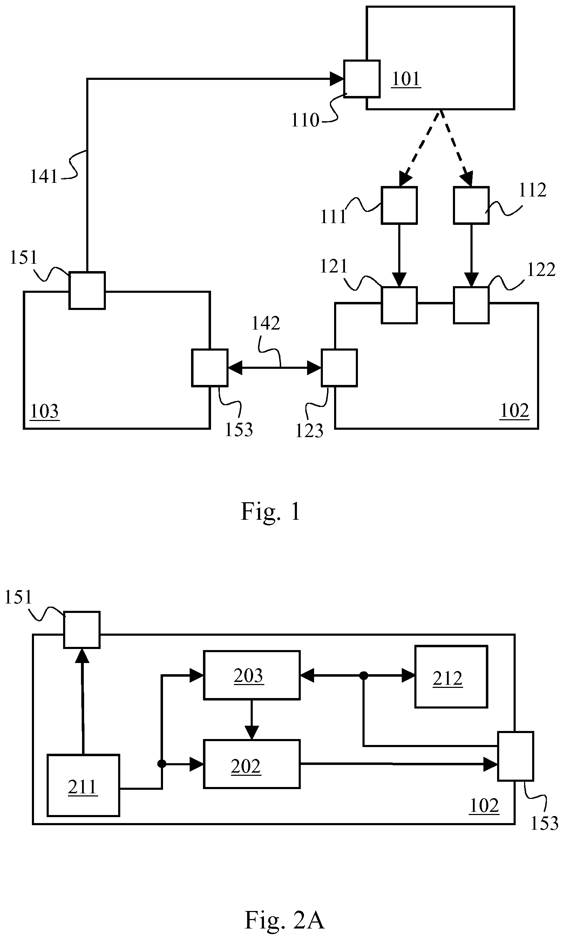

La Fig. 1 illustre schématiquement un système dans lequel l'invention peut être mise en oeuvre.

Le système de la Fig. 1 comporte un dispositif source 103 de signal audio ou audiovisuel. Selon un premier exemple, le dispositif source 103 est un décodeur numérique adapté pour recevoir et décoder des signaux audiovisuels en provenance d'une liaison satellite ou d'une liaison Ethernet vers une passerelle domestique via laquelle des contenus audiovisuels sont reçus de l'Internet. Selon un second exemple, le dispositif source 103 est un lecteur Blu-Ray (marque déposée) ou un ordinateur sur lequel s'exécute un logiciel lecteur de média (« media player » en anglais). Tout dispositif adapté pour fournir un signal audio destiné être restitué par un dispositif de restitution sonore peut être mis en oeuvre.

Le système de la Fig. 1 comporte en outre un dispositif de restitution sonore 101, qui peut être un dispositif de restitution audiovisuelle. Selon un premier exemple, le dispositif de restitution sonore 101 est un écran comportant des haut-parleurs intégrés. Selon un second exemple, le dispositif de restitution sonore 101 est un amplificateur hi-fi.

Le dispositif source 103 comporte une interface 151 pour être connecté au dispositif de restitution sonore 101 par le biais d'un lien 141. Le dispositif de restitution sonore 101 comporte une interface 110 pour être connecté au dispositif source 103 via le lien 141. Par exemple, le lien 141 est conforme aux spécifications HDMI (« High-Definition Multimedia Interface » en anglais), WHDI (« Wireless Home Digital Interface » en anglais), SPDIF (« Sony / Philips Digital Interconnect Format » en anglais) ou Péritel (marque déposée). Ainsi, le dispositif de restitution sonore 101 est capable de restituer tout signal audio reçu du dispositif source 103 via le lien 141.

Le système de la Fig. 1 comporte en outre un dispositif de traitement acoustique 102, et au moins un microphone 111, 112. Le dispositif de traitement acoustique 102 comporte au moins une interface 121, 122, adaptée pour connecter le(s) microphone(s) 111, 112. Le dispositif de traitement acoustique 102 est ainsi apte à recevoir des signaux audio correspondant à des signaux sonores captés par le(s) microphone(s) 111, 112. Le dispositif de traitement acoustique 102 comporte aussi une interface 123 pour être connecté au dispositif source 103 par le biais d'un lien 142. Le dispositif source 103 comporte une interface 153 pour être connecté au dispositif de traitement acoustique 102 via le lien 142. Par exemple, le lien 142 est conforme aux spécifications HDMI, USB (« Universal Serial Bus » en anglais) ou IEEE 1394.

Le(s) microphone(s) 111, 112 permettent de capter un environnement sonore, et notamment les signaux sonores diffusés par le dispositif de restitution 101 et la voix d'un utilisateur du système.

Le dispositif source 103 et le dispositif de traitement acoustique 102 peuvent être incorporés dans un même boîtier, et peuvent en outre être mis en oeuvre sur un même circuit imprimé (PCB pour « Printed Circuit Board » en anglais), le lien 142 étant alors une piste du circuit imprimé.

La Fig. 2A illustre schématiquement un exemple d'architecture matérielle du dispositif source 103.

Le dispositif source 103 comporte une unité de fourniture de signal audio 211 permettant de fournir un signal audio, par exemple résultant d'un démultiplexage et d'un décodage d'un signal audiovisuel reçu via une liaison satellite. Le signal audio est fourni à l'interface 151 et en entrée d'une mémoire tampon de type FIFO (« First-In First-Out » en anglais) 202 du dispositif source 103. Pendant une phase d'initialisation, le signal audio est aussi fourni à une unité de contrôle 203 du dispositif source 103. Pendant la phase d'initialisation, un autre signal audio, en provenance de l'interface 153, est aussi fourni à l'unité de contrôle 203.

L'unité de fourniture de signal sonore 211 peut en outre comporter un générateur de signal audio selon un motif (« pattern » en anglais) prédéfini, utilisable lors de la phase d'initialisation.

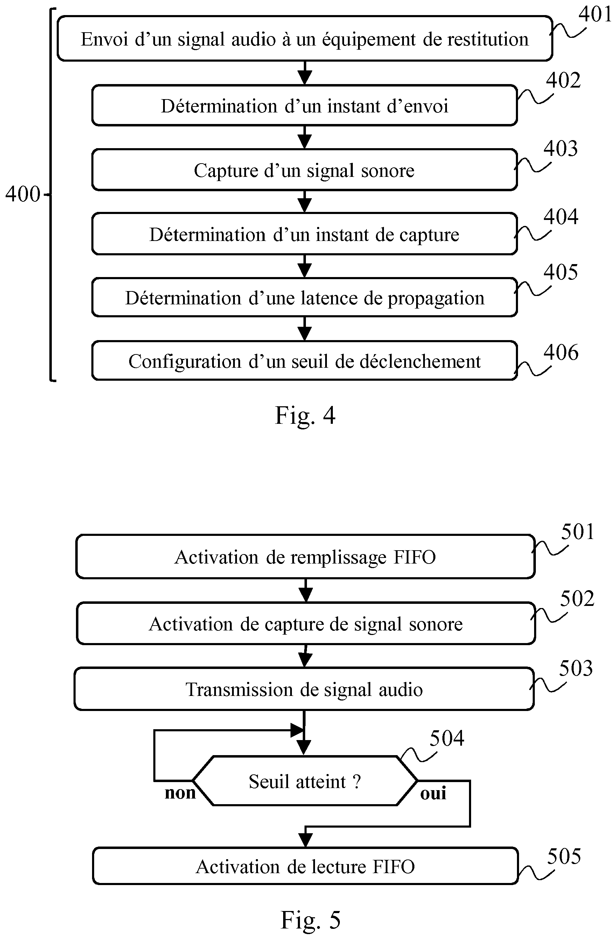

La phase d'initialisation susmentionnée est détaillée ci-après en relation avec la Fig. 4, et une phase ultérieure de fonctionnement nominal du dispositif source 103 est détaillée ci-après en relation avec la Fig. 5.

Le dispositif source 103 comporte une unité de traitement 212 destinée à appliquer un traitement sur un signal audio filtré, en provenance de l'interface 153. Selon un premier exemple, l'unité de traitement 212 met en oeuvre un mécanisme de reconnaissance vocale. Selon un second exemple, l'unité de traitement 212 met en oeuvre un mécanisme de mise en forme pour transmission du signal audio filtré dans le cadre d'une téléconférence.

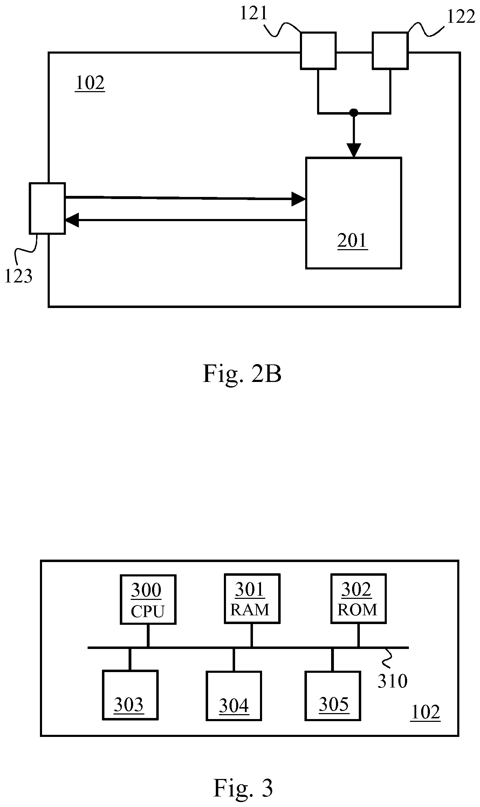

La Fig. 2B illustre schématiquement un exemple d'architecture matérielle du dispositif de traitement acoustique 102.

Le dispositif de traitement acoustique 102 comporte une unité de traitement acoustique 201, dont la fonction est de supprimer un premier signal audio, dit de référence, d'un second signal audio. Le signal audio de référence est fourni par le dispositif source via le lien 142. Le second signal audio est le signal audio résultant du signal sonore capté par le(s) microphone(s) 111, 112. L'unité de traitement acoustique 201 fournit alors au dispositif source 103 via le lien 142 un signal audio filtré, c'est-à-dire dénué autant que possible du signal audio de référence, lorsque ce signal audio de référence a été détecté dans le signal capté par le(s) microphone(s). Par exemple, l'unité de traitement acoustique 201 est un composant de référence CX20708-21X de la société Connexant.

Il convient de noter que l'unité de traitement acoustique 201 peut comporter une mémoire tampon interne pour permettre d'effectuer les traitements attendus par l'unité de traitement acoustique 201. Cependant, cette mémoire tampon interne ne sert qu'à stocker les signaux audio pendant une fenêtre temporelle prédéfinie, par exemple de l'ordre de 200 ms, pour effectuer ces traitements. Aucun seuil de déclenchement de lecture n'y est associé et n'est configurable.

Les Figs. 2A et 2B sont respectivement des exemples complémentaires d'architecture matérielle du dispositif source 103 et du dispositif de traitement acoustique 102. Une répartition différente des fonctions mises en oeuvre peut être envisagée. Par exemple, l'unité de contrôle 203 et/ou la FIFO 202 peuvent être mises en oeuvre dans le dispositif de traitement acoustique 102. L'agencement selon les Figs. 2A et 2B a cependant l'avantage de permettre une mise à jour aisée de dispositifs fournisseurs de contenus audio ou audiovisuels déjà déployés, par exemple chez les particuliers. En effet, si l'on prend l'exemple des décodeurs satellite ou de télévision sur IP (« Internet Procotol » en anglais), ceux-ci mettent en oeuvre de nombreuses fonctions par implémentation logicielle. Il est alors aisé de faire une mise à jour de cette implémentation logicielle afin de mettre en oeuvre les fonctions décrites ici en relation avec le dispositif source 103. Il suffirait alors de lui adjoindre le dispositif de traitement acoustique 102 pour mettre en oeuvre l'invention, sans avoir à remplacer la plate-forme matérielle de ces décodeurs.

On utilisera le terme d'« équipement » pour désigner indifféremment un dispositif ou un ensemble de dispositifs mettant en oeuvre ces fonctions.

La Fig. 3 illustre schématiquement un autre exemple d'architecture matérielle du dispositif source 103, qui comporte alors, reliés par un bus de communication 310 : un processeur ou CPU (« Central Processing Unit » en anglais) 300 ; une mémoire vive RAM (« Random Access Memory » en anglais) 301 ; une mémoire morte ROM (« Read Only Memory » en anglais) 302 ; une unité de stockage ou un lecteur de support de stockage, tel qu'un disque dur HDD (« Hard Disk Drive » en anglais) 303 ; une première interface 304 permettant de communiquer via le lien 141 ; et une seconde interface 305 permettant de communiquer via le lien 142.

Il convient de noter que le dispositif de traitement acoustique 102 peut être mis en oeuvre avec une architecture matérielle similaire.

Dans le cadre de l'architecture présentée à la Fig. 3, la mise en oeuvre de la FIFO 202 peut se faire au sein de la seconde interface 305 ou au sein de la RAM 301, par exemple sous la forme d'une liste chaînée.

Le processeur 300 est capable d'exécuter des instructions chargées dans la RAM 301 à partir de la ROM 302, d'une mémoire externe (non représentée), d'un support de stockage, tel que le disque dur HDD 303, ou d'un réseau de communication. Lorsque le dispositif source 103 est mis sous tension, le processeur 300 est capable de lire de la RAM 301 des instructions et de les exécuter. Ces instructions forment un programme d'ordinateur causant la mise en oeuvre, par le processeur 300, de tout ou partie des algorithmes et étapes décrits ci-après. Tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 4 illustre schématiquement un algorithme mettant en oeuvre une phase d'initialisation 400 du dispositif source 103.

Dans une étape 401, le dispositif source 103 envoie un signal audio via l'interface 151. Ce signal audio correspond préférentiellement à un motif prédéfini. Ce signal audio peut aussi être *a priori* inconnu du dispositif source 103, par exemple issu d'un démultiplexage et d'un décodage d'un signal audiovisuel reçu par le dispositif source 103 via une liaison satellite. Dans l'architecture présentée à la Fig. 2A, le dispositif source 103 envoie aussi le signal audio à l'unité de contrôle 203.

Dans une étape 402 suivante, le dispositif source 103 détermine une information représentative d'un instant auquel le dispositif source 103 a envoyé le signal audio via l'interface 151. Le signal audio envoyé par le dispositif source 103 est donc destiné à être restitué par le dispositif de restitution 101. Le dispositif de restitution 101 décode le signal audio transmis par le dispositif source 103 et génère un signal sonore correspondant, le(s) microphone(s) 111, 112 étant adapté(s) pour capter ce signal sonore.

Dans une étape 403 suivante, le dispositif source 103 effectue, ou requiert, une capture d'environnement sonore. Pour ce faire, le dispositif source 103 instruit via le lien 142 le dispositif de traitement acoustique 102 de démarrer une capture d'environnement sonore grâce au(x) microphone(s) 111, 112. Pendant cette phase d'initialisation, le dispositif source 103 ne transmet pas de signal audio de référence au dispositif de traitement acoustique 102 via l'interface 153. Le dispositif de traitement acoustique 102 retransmet alors au dispositif source 103 directement le signal audio correspondant au signal sonore capturé par le(s) microphone(s) 111, 112, aucun signal audio de référence n'étant à supprimer du signal sonore capté par le(s) microphone(s) 111, 112. Dans l'architecture présentée à la Fig. 2A, le dispositif source 103 envoie le signal audio reçu du dispositif de traitement acoustique 102 à l'unité de contrôle 203.

Dans une étape 404 suivante, le dispositif source 103 détermine une information représentative d'un instant auquel le dispositif de traitement acoustique 102 a reçu le signal audio grâce au(x) microphone(s) 111, 112. Il est possible de considérer que l'instant auquel le dispositif de traitement acoustique 102 a reçu le signal audio grâce au(x) microphone(s) 111, 112 est le même que celui auquel le dispositif source 103 a reçu le signal audio via l'interface 153. Il est alors considéré que les traitements effectués par le dispositif de traitement acoustique 102 ont une latence négligeable. Si tel n'est pas le cas, le dispositif source 103 a, par configuration, connaissance de ce temps de latence et peut ainsi le prendre en compte.

Afin de déterminer l'instant auquel le dispositif de traitement acoustique 102 a reçu le signal audio grâce au(x) microphone(s) 111, 112, le dispositif source 103 détecte un instant où le signal audio reçu via l'interface 153 est supérieur à un seuil prédéfini. Le dispositif source 103 considère alors que cet instant de franchissement dudit seuil prédéfini est celui auquel le dispositif de traitement acoustique 102 a reçu le signal audio grâce au(x) microphone(s) 111, 112. Selon une variante de réalisation, le dispositif source 103 effectue une corrélation entre le signal audio envoyé via l'interface 151 et le signal audio reçu via l'interface 153, afin de déterminer à quelle fenêtre temporelle correspond le signal audio envoyé dans le signal audio reçu. Pour ce faire, un filtre adapté (« matched filter » en anglais), aussi appelé filtre de North, peut être appliqué. L'utilisation d'un tel filtre permet avantageusement de maximiser le rapport signal-à-bruit. D'autres méthodes de corrélation peuvent être utilisées.

Dans une étape 405 suivante, le dispositif source 103 détermine une information représentative d'une latence de propagation, qui est la différence entre l'instant auquel le dispositif de traitement acoustique 102 a reçu le signal audio grâce au(x) microphone(s) 111, 112 et l'instant auquel le dispositif source 103 a envoyé le signal audio via l'interface 151. Cette latence de propagation est déterminée grâce aux informations déterminées dans les étapes 404 et 402 respectivement.

Dans une étape 406 suivante, le dispositif source 103 détermine une information représentative d'un seuil de déclenchement de la FIFO 202, à mettre en oeuvre pendant la phase de fonctionnement nominal du dispositif source 103. Ce seuil de déclenchement de la FIFO 202 est déterminé en fonction de la latence de propagation déterminée à l'étape 405, et permet d'appliquer un retard au signal audio de référence à transmettre au dispositif de traitement acoustique 102 via l'interface 153. Si l'on néglige le temps de propagation entre le dispositif source 103 et le dispositif de traitement acoustique 102, ce retard est égal à la latence de propagation déterminée à l'étape 405. Sinon, ce retard est égal à la latence de propagation déterminée à l'étape 405, à laquelle est retranchée une valeur prédéfinie du temps de propagation entre le dispositif source 103 et le dispositif de traitement acoustique 102.

Ensuite, le dispositif source 103 configure la FIFO 202 de sorte que soit appliqué, en phase de fonctionnement nominal, le seuil de déclenchement déterminé à l'étape 405. Il est alors mis fin à la phase d'initialisation et la phase de fonctionnement nominal peut débuter.

Le dispositif source 103 peut fournir à l'utilisateur une indication que la phase d'initialisation est en cours, par exemple au moyen d'une LED (« Light-Emitting Diode » en anglais) d'une interface utilisateur. Cela peut permettre à l'utilisateur de savoir qu'il doit limiter tout bruit ambiant pour faciliter la détection du signal audio attendu en retour par le dispositif source 103.

Dans l'architecture présentée à la Fig. 2A, les étapes 402, 404, 405 et 406 sont effectuées par l'unité de contrôle 203.

La Fig. 5 illustre schématiquement un algorithme de fonctionnement nominal du dispositif source 103, une fois exécutée la phase d'initialisation.

Dans une étape 501, le dispositif source 103 active le remplissage de la FIFO 202. Aucune donnée n'est alors présente dans la FIFO 202.

Dans une étape 502 suivante, le dispositif source 103 active la capture de signal sonore grâce au(x) microphone(s) 111, 112. Pour ce faire, le dispositif source 103 envoie au dispositif de traitement acoustique 102 une instruction d'enclencher une telle capture. Un signal audio correspondant au signal sonore capturé par le(s) microphone(s) 111, 112 est alors reçu par l'unité de traitement acoustique 201.

Dans une étape 503 suivante, le dispositif source 103 active l'envoi d'un signal audio au dispositif de restitution 101 via l'interface 151. Ce signal audio résulte par exemple d'un démultiplexage et d'un décodage d'un contenu audiovisuel reçu ou lu par le dispositif source 103. Le dispositif source 103 ayant activé le remplissage de la FIFO 202, le signal audio est aussi stocké dans la FIFO 202.

Dans une étape 504 suivante, le dispositif source 103 vérifie si le seuil de remplissage de la FIFO 202, déterminé à l'étape 406, est atteint. Si tel est le cas, une étape 505 est effectuée ; sinon, l'étape 504 est réitérée.

Dans l'étape 505, le dispositif source 103 active la lecture de la FIFO 202. Les données stockées dans la FIFO 202 sont alors transmises en tant que signal audio de référence au dispositif de traitement acoustique 102 via l'interface 153. Cette lecture de la FIFO 202 s'effectue au rythme où les données du signal audio sont écrites dans la FIFO 202. Un retard temporel, dont la durée est adaptée pour compenser la latence de propagation déterminée à l'étape 405, est ainsi appliqué sur le signal audio fourni par le dispositif source 103 au dispositif de traitement acoustique 102.

Ainsi, grâce à l'application de ce retard, les signaux audio en entrée de l'unité de traitement acoustique 201 sont suffisamment synchronisés pour permettre à l'unité de traitement acoustique 201 de supprimer le signal audio de référence du signal audio correspondant au signal sonore capté par le(s) microphone(s) 111, 112. De cette manière, le signal audio fourni à l'unité de traitement 212 est filtré et substantiellement dénué du signal sonore correspondant au signal audio restitué par le dispositif de restitution 101. Un léger bruit peut toutefois subsister de par les distorsions dans le signal sonore capté par le(s) microphone(s) 111, 112 par rapport au signal audio de référence. Alors, lorsque l'utilisateur désire utiliser des commandes vocales ou participer à une téléconférence, sa voix peut être clairement distinguée dans le signal audio, même si le volume sonore du dispositif de restitution 101 est élevé.

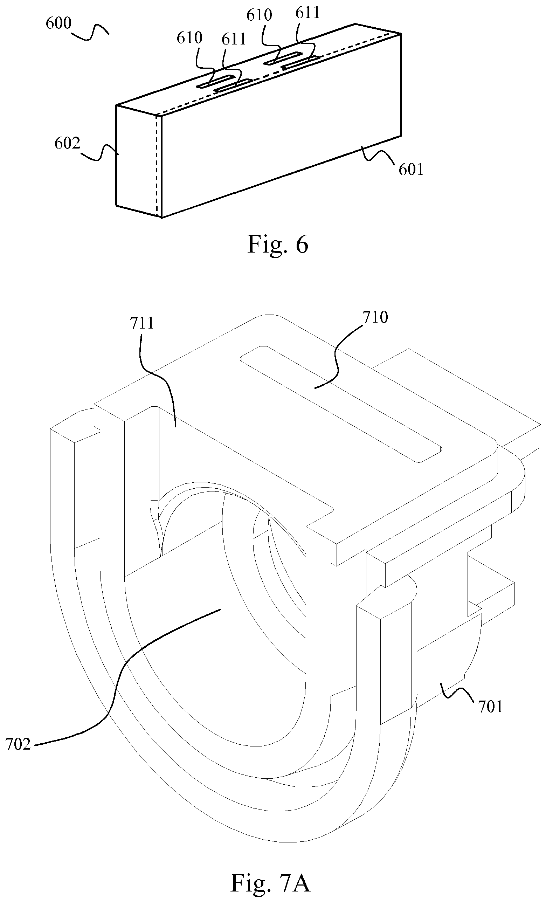

La Fig. 6 illustre schématiquement une vue en perspective simplifiée d'une coque d'un boîtier 600 dans lequel le dispositif de traitement acoustique 102 peut être installé.

La coque du boîtier 600 comporte une première partie 601 et une deuxième partie 602. Les deux parties 601 et 602 sont destinées à être assemblées l'une avec l'autre, par exemple par collage, ou au moyen de vis d'assemblage, ou à l'aide de clips.

De manière préférentielle, ladite première partie 601 sert de couvercle à ladite seconde partie 602. L'épaisseur extérieure de cette première partie est montrée en pointillés sur la Fig. 6. Le dispositif de traitement acoustique 102 est constitué d'une carte électronique sur laquelle sont montés des composants réalisant les fonctions précédemment décrites. La carte électronique est montée sur la face interne de ladite première partie 601. L'assemblage de la carte électronique avec ladite première partie 601 peut se faire au moyen de vis d'assemblage, de rivets ou de clips.

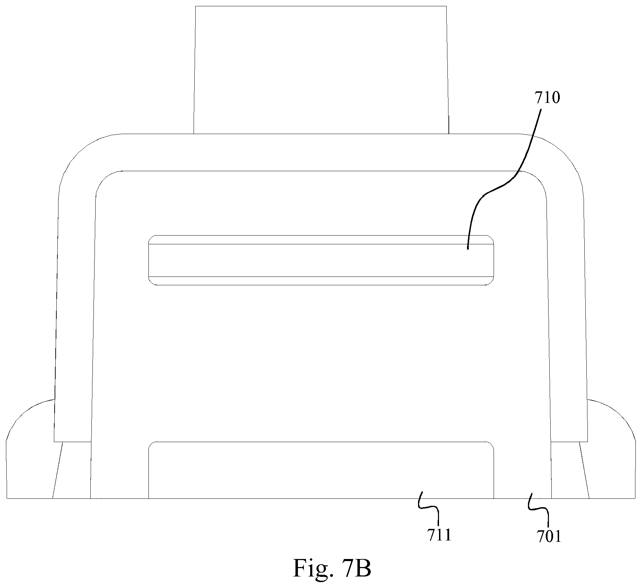

Les microphones 111, 112, sont en outre intégrés au boîtier 600, dont la coque comporte pour chaque microphone 111, 112, une première fente 610 et une seconde fente 611. Ces fentes 610, 611 permettent aux microphones 111, 112, de capter l'environnement sonore, tel que décrit ci-après en relation avec les Figs. 7A et 7B. Dans l'illustration de la Fig. 6, les fentes 610, 611, sont pratiquées dans ladite deuxième partie 602 de la coque.

La Fig. 7A illustre schématiquement une vue en perspective d'un support 701 à microphone destiné à être placé dans le boîtier 600. Chaque microphone 111, 112 est alors unidirectionnel et dispose d'un support 701 associé.

Le support 701 destiné à recevoir, de manière ajustée, le microphone 111 ou 112 est préférentiellement réalisé en caoutchouc, de manière à isoler le microphone 111 ou 112 de vibrations transmises par des pièces mécaniques du boîtier 600. Des microphones de référence CM1045RFH-35BL-C56F1K-LF de la société MWM Acoustics sont par exemple utilisés.

Sur une face du support 701 sont pratiquées deux fentes 710, 711, destinées à être respectivement placées en correspondance des fentes 610, 611 pratiquées dans la coque du boîtier 600, lorsque le support 701 est installé dans le boîtier 600.

Le support 701 présente une cavité 702 débouchant sur les fentes 710, 711, et destinée à recevoir le microphone 111 ou 112. Une fois installé dans la cavité 702, le microphone 111 ou 112 est disposé de telle sorte qu'une face du microphone 111 ou 112 dans la direction du signal sonore à privilégier soit dans le prolongement de la fente 711 et donc de la fente 611 ; en outre, le microphone 111 ou 112 est disposé de telle sorte que la face du microphone 111 ou 112 opposée à la direction du signal sonore à privilégier soit dans le prolongement de la fente 710 et donc de la fente 610. Dans les constructions typiques des microphones unidirectionnels, cette face opposée à la direction du signal sonore à privilégier comporte un trou, qui permet de laisser entrer par l'arrière les sons autres que ceux à privilégier, c'est-à-dire ceux qui proviennent des autres directions que celle d'où vient le signal sonore à privilégier. En d'autres termes, ce trou permet d'atténuer le bruit ambiant, sans pour autant l'éliminer. Pour ce faire, il est cependant nécessaire que les temps de propagation du signal sonore depuis les fentes pratiquées dans la coque du boîtier 600 et les deux faces susmentionnées du microphone 11, 112 soient substantiellement identiques, c'est-à-dire que les distances entre ces fentes et ces faces soient substantiellement identiques. L'agencement du support 701 permet d'atteindre cet objectif. Le terme « substantiellement » signifie que toute différence existante est négligeable au vu de la réactivité du microphone.

La combinaison du support 701 tel que présenté et d'au moins un microphone 111, 112, permet ainsi de mettre en avant le signal sonore (voix de l'utilisateur dans le système de la Fig. 1) dans la direction privilégiée par le(s) microphone(s) 111, 112 unidirectionnel(s). La « mise en avant » signifie faire ressortir la voix de l'utilisateur par rapport aux autres sons de l'environnement sonore. Cela facilite le traitement effectué par le dispositif de traitement acoustique 102.

La Fig. 7B illustre schématiquement une autre vue du support 701 à microphone. Il apparaît, de manière plus marquante sur cette vue, que la fente 711 est préférentiellement formée par un décrochement, ou évidement. La fente 711 est ainsi définitivement formée lorsque le support 701 est monté en appui sur la face interne de la première partie 601 de la coque du boîtier 600.

Il convient de noter que le support 701 peut être utilisé pour installer un microphone unidirectionnel dans un boîtier sans pour autant implémenter les traitements mis en oeuvre par les dispositifs source 103 et de traitement acoustique 102. Cela permet d'améliorer la mise en avant de la voix de l'utilisateur.

## Revendications

1. Système comprenant un dispositif source (103) et un dispositif de traitement acoustique (102), le système étant **caractérisé en ce que** :
le dispositif source comportant :
- une première interface (151) destinée à être connectée à un dispositif de restitution sonore (101), et,
- une deuxième interface (153) destinée à être connectée au dispositif de traitement acoustique,
le dispositif de traitement acoustique comportant :
- au moins une troisième interface (121 ; 122) destinée à être connectée à au moins un microphone (111 ; 112),
- une quatrième interface (123) destinée à être connectée au dispositif source,
le système comporte des moyens pour mettre en oeuvre une phase d'initialisation comportant :
- une unité de traitement acoustique (201) du dispositif de traitement acoustique adaptée pour transmettre (403) au dispositif source via la quatrième interface un premier signal audio reçu via la troisième interface,
- une unité de contrôle (203) du dispositif source adaptée pour :
∘ déterminer (405) une latence de propagation entre un instant de transmission d'un second signal audio via la première interface et un instant de réception du premier signal audio via la deuxième interface,
∘ configurer (406) une mémoire tampon (202) du dispositif source avec un seuil de déclenchement de lecture défini en fonction de ladite latence de propagation déterminée,
et **en ce que** le dispositif source comporte en outre des moyens pour mettre en oeuvre une phase de fonctionnement nominal comportant :
- l'unité de traitement acoustique (201) adaptée pour délivrer au dispositif source, via la quatrième interface, un signal audio filtré par atténuation ou suppression d'un signal audio de référence à partir d'un signal audio reçu via la troisième interface, le signal audio de référence étant transmis par la mémoire tampon du dispositif source via la quatrième interface,
- une unité de fourniture de signal audio (211) adaptée pour transmettre (503) un signal audio via la première interface, le signal audio de référence utilisé par l'unité de traitement acoustique (201) résultant d'un passage dudit signal audio par la mémoire tampon (202).

2. Système selon la revendication 1, **caractérisé en ce que** le second signal audio est constitué d'un motif prédéfini.

3. Système selon l'une quelconque des revendications 1 et 2, **caractérisé en ce que** l'unité de contrôle (203) adaptée pour déterminer la latence de propagation comporte des moyens pour détecter un franchissement de seuil d'amplitude du premier signal audio.

4. Système selon l'une quelconque des revendications 1 et 2, **caractérisé en ce que** l'unité de contrôle (203) adaptée pour déterminer la latence de propagation comporte un filtre de North appliqué entre le premier signal audio et le second signal audio.

5. Système selon l'une quelconque des revendications 1 à 4, **caractérisé en ce que** l'unité de contrôle désactive toute transmission de signal audio de référence à l'unité de traitement acoustique pendant la phase d'initialisation.

6. Procédé mis en oeuvre par un système comportant un dispositif source (103) et un dispositif de traitement acoustique (102), le dispositif source comportant :
- une première interface (151) destinée à être connectée à un dispositif de restitution sonore (101), et,
- une deuxième interface (153) destinée à être connectée au dispositif de traitement acoustique,
le dispositif de traitement acoustique comportant :
- au moins une troisième interface (121 ; 122) destinée à être connectée à au moins un microphone (111 ; 112),
une quatrième interface (123) destinée à être connectée au dispositif source,
le dispositif de traitement acoustique comportant une unité de traitement acoustique (201) adaptée pour délivrer un signal audio filtré par atténuation ou suppression d'un signal audio de référence à partir d'un signal audio reçu via la troisième interface, l'unité de traitement acoustique étant connectée à une mémoire tampon (202) du dispositif source, **caractérisé en ce que** le procédé comporte une phase d'initialisation comportant les étapes suivantes :
- déterminer (405), par une unité de contrôle (203) du dispositif source, une latence de propagation entre un instant de transmission d'un premier signal audio via la première interface et un instant de réception d'un second signal audio via la troisième interface ;
- configurer (406), par une unité de contrôle (203) du dispositif source, la mémoire tampon (202) avec un seuil de déclenchement de lecture défini en fonction de ladite latence de propagation déterminée ;
et **en ce que** le procédé comporte en outre une phase de fonctionnement nominal comportant :
- transmettre (503), par une unité de fourniture de signal audio (211) du dispositif source, un troisième signal audio via la première interface, le signal audio de référence utilisé par l'unité de traitement acoustique résultant d'un passage du troisième signal audio par la mémoire tampon.

7. Produit programme d'ordinateur, **caractérisé en ce qu'**il comporte des instructions pour mettre en oeuvre, par un équipement, les étapes du procédé selon la revendication 6 exécutées par le dispositif source, lorsque ledit programme est exécuté par un processeur dudit équipement.

8. Moyens de stockage, **caractérisés en ce qu'**ils stockent un programme d'ordinateur comportant des instructions pour mettre en oeuvre, par un équipement, les étapes du procédé selon la revendication 6 exécutées par le dispositif source, lorsque ledit programme est exécuté par un processeur dudit équipement.

## Patentansprüche

1. System umfassend eine Quellvorrichtung (103) und eine akustische Verarbeitungsvorrichtung (102), wobei das System **dadurch gekennzeichnet** ist:
wobei die Quellvorrichtung umfasst:
- eine zum Verbinden mit einer Klangwiedergabevorrichtung (101) ausgebildete erste Schnittstelle (151), und
- eine zum Verbinden mit der akustischen Verarbeitungsvorrichtung ausgebildete zweite Schnittstelle (153), wobei die akustische Verarbeitungsvorrichtung umfasst:
- wenigstens eine zum Verbinden mit einem Mikrofon (111, 112) ausgebildete dritte Schnittstelle (121, 122),
- eine zum Verbinden mit der Quellvorrichtung ausgebildete vierte Schnittstelle (123),
dass das System Mittel zum Durchführen einer Initialisierungsphase umfasst, umfassend:
- eine zum Senden (403) eines über die dritte Schnittstelle empfangenen Signals über die vierte Schnittstelle an die Quellvorrichtung ausgebildete akustische Verarbeitungseinheit (201) der akustischen Verarbeitungsvorrichtung,
- eine Steuereinheit (203) der Quellvorrichtung, ausgebildet zum:
o Ermitteln (405) einer Ausbreitungslatenz zwischen einem Zeitpunkt des Sendens eines zweiten Audiosignals über die erste Schnittstelle und einem Zeitpunkt des Empfangs des ersten Audiosignals über die zweite Schnittstelle,
∘ Konfigurieren (406) eines Pufferspeichers (202) der Quellvorrichtung mit einer entsprechend der ermittelten Ausbreitungslatenz definierten Leseauslöseschwelle, und dass die Quellvorrichtung ferner Mittel zum Durchführen einer Nennbetriebsphase umfasst, umfassend:
- die zum Liefern eines durch Dämpfung oder Unterdrückung eines Referenzaudiosignals aus einem über die dritte Schnittstelle empfangenen Audiosignal gefilterten Audiosignals über die vierte Schnittstelle an die Quellvorrichtung ausgebildete akustische Verarbeitungsvorrichtung (201), wobei das Referenzaudiosignal durch den Pufferspeicher der Quellvorrichtung über die vierte Schnittstelle gesendet wird,
- eine zum Senden (503) eines Audiosignals über die erste Schnittstelle ausgebildete Audiosignalliefereinheit (211), wobei das von der akustischen Verarbeitungseinheit (201) verwendete Referenzaudiosignal daraus resultiert, dass das Audiosignal den Pufferspeicher (202) passiert.

2. System nach Anspruch 1, **dadurch gekennzeichnet, dass** das zweite Audiosignal aus einem vordefinierten Muster besteht.

3. System nach Anspruch 1 oder 2, **dadurch gekennzeichnet, dass** die zum Ermitteln der Ausbreitungslatenz ausgebildete Steuereinheit (203) Mittel zum Erfassen eines Überschreitens der Amplitudenschwelle des ersten Audiosignals umfasst.

4. System nach Anspruch 1 oder 2, **dadurch gekennzeichnet, dass** die zum Ermitteln der Ausbreitungslatenz ausgebildete Steuereinheit (203) ein zwischen dem ersten Audiosignal und dem zweiten Audiosignal angewendetes North-Filter umfasst.

5. System nach einem der Ansprüche 1 bis 4, **dadurch gekennzeichnet, dass** die Steuereinheit das Senden von Referenzaudiosignalen an die akustische Verarbeitungseinheit während der Initialisierungsphase vollständig deaktiviert.

6. Von einem System umfassend eine Quellvorrichtung (103) und eine akustische Verarbeitungsvorrichtung (102) durchgeführtes Verfahren, wobei die Quellvorrichtung umfasst:
- eine zum Verbinden mit einer Klangwiedergabevorrichtung (101) ausgebildete erste Schnittstelle (151), und
- eine zum Verbinden mit der akustischen Verarbeitungsvorrichtung ausgebildete zweite Schnittstelle (153), wobei die akustische Verarbeitungsvorrichtung umfasst:
- wenigstens eine zum Verbinden mit einem Mikrofon (111, 112) ausgebildete dritte Schnittstelle (121, 122),
- eine zum Verbinden mit der Quellvorrichtung ausgebildete vierte Schnittstelle (123),
wobei die akustische Verarbeitungsvorrichtung eine zum Liefern eines durch Dämpfung oder Unterdrückung eines Referenzaudiosignals aus einem über die dritte Schnittstelle empfangenen Audiosignal gefilterten Audiosignals ausgebildete akustische Verarbeitungsvorrichtung (201) umfasst, wobei die akustische Verarbeitungsvorrichtung mit einem Pufferspeicher (202) der Quellvorrichtung verbunden ist, **dadurch gekennzeichnet, dass** das Verfahren eine Initialisierungsphase umfasst, umfassend die folgenden Schritte:
- Ermitteln (405) einer Ausbreitungslatenz zwischen einem Zeitpunkt des Sendens eines ersten Audiosignals über die erste Schnittstelle und einem Zeitpunkt des Empfangs eines zweiten Audiosignals über die dritte Schnittstelle durch eine Steuereinheit (203) der Quellvorrichtung,
- Konfigurieren (406) des Pufferspeichers (202) mit einer entsprechend der ermittelten Ausbreitungslatenz definierten Leseauslöseschwelle durch eine Steuereinheit (203) der Quellvorrichtung,
und dass das Verfahren ferner eine Nennbetriebsphase umfasst, umfassend:
- Senden (503) eines dritten Audiosignals über die erste Schnittstelle durch eine Audiosignalliefereinheit (211), wobei das von der akustischen Verarbeitungseinheit verwendete Referenzaudiosignal daraus resultiert, dass das dritte Audiosignal den Pufferspeicher passiert.

7. Computerprogrammprodukt, **dadurch gekennzeichnet, dass** es Anweisungen zum Durchführen der von der Quellvorrichtung ausgeführten Schritte des Verfahrens nach Anspruch 6 umfasst, wenn das Programm auf einem Prozessor des Geräts ausgeführt wird.

8. Speichermittel, **dadurch gekennzeichnet, dass** sie ein Computerprogramm umfassend Anweisungen zum Durchführen der von der Quellvorrichtung ausgeführten Schritte des Verfahrens nach Anspruch 6 durch ein Gerät speichern, wenn das Programm auf einem Prozessor des Geräts ausgeführt wird.

## Claims

1. System comprising a source device (103) and an acoustic processing device (102), wherein:
the source device comprising:
- a first interface (151) intended to be connected to a sound reproduction device (101), and,
- a second interface (153) intended to be connected to the acoustic processing device,
the acoustic processing device comprising:
- at least one third interface (121; 122) intended to be connected to at least one microphone (111, 112),
- a fourth interface (123) intended to be connected to the source device,
the system comprises means for implementing an initialisation phase comprising:
- an acoustic processing unit (201) of the acoustic processing device adapted for delivering (403) to the source device, via the fourth interface, a first audio signal received via the third interface,
- a control unit (203) of the source device adapted for:
∘ determining (405) a propagation latency between an instant of transmission of a second audio signal via the first interface and an instant of reception of the first audio signal via the second interface,
∘ configuring (406) a buffer (202) of the source device with a reading-triggering threshold defined according to said determined propagation latency,
and in that the source device further comprises means for implementing a nominal operating phase comprising:
- the acoustic processing unit adapted for transmitting to the source device, via the fourth interface, an audio signal filtered by attenuation or suppression of a reference audio signal from an audio signal received via the third interface, the reference audio signal being transmitted by the buffer of the source device via the fourth interface,
- an audio signal supplying unit (211) adapted for transmitting (503) an audio signal via the first interface, the reference audio signal used by the acoustic processing unit resulting from a passage of said audio signal through the buffer.

2. System according to claim 1, **characterised in that** the second audio signal consists of a predefined pattern.

3. System according to claim 1 or 2, **characterised in that** the control unit adapted for determining the propagation latency comprises means for detecting a crossing of an amplitude threshold of the first audio signal.

4. System according to claim 1 or 2, **characterised in that** the control unit adapted for determining the propagation latency comprises a North filter applied between the first audio signal and the second audio signal.

5. System according to any preceding claim, **characterised in that** the control unit deactivates any transmission of a reference audio signal to the acoustic processing unit during the initialisation phase.

6. Method implemented by a system comprising a source device (103) and an acoustic processing device (102), the source device comprising:
- a first interface (151) intended to be connected to a sound reproduction device (101), and,
- a second interface (153) intended to be connected to the acoustic processing device,
the acoustic processing device comprising:
- at least one third interface (121; 122) intended to be connected to at least one microphone (111, 112),
- a fourth interface (123) intended to be connected to the source device,
- an acoustic processing unit (201) adapted for delivering an audio signal filtered by attenuation or suppression of a reference audio signal from an audio signal received via the third interface, the acoustic processing unit being connected to a buffer (202) of the source device, **characterised in that** the method comprises an initialisation phase comprising the following steps:
- determining (405), by a control unit (203) of the source device, a propagation latency between an instant of transmitting a first audio signal via the first interface and an instant of reception of a second audio signal via the third interface ;
- configuring (406), by the control unit of the source device, the buffer with a reading-triggering threshold defined according to said determined propagation latency;
and **in that** the method further comprises a nominal operating phase comprising:
- transmitting (503), by an audio signal supplying unit (211) of the source device, a third audio signal via the first interface, the reference audio signal used by the acoustic processing unit resulting from a passage of the third audio signal through the buffer.

7. Computer program, **characterised in that** it comprises instructions for implementing, by a device, the steps of the method according to claim 6 executed by the source device, when said computer program is executed by a processor of said device.

8. Storage medium, **characterised in that** it stores a computer program comprising instructions for implementing, by a device, the steps of the method according to claim 6 executed by the source device, when said program is executed by a processor of said device.
